# EUROPEAN PATENT SPECIFICATION

(11) **EP 2 570 245 B1**
(45) Date of publication and mention of the grant of the patent: **15.04.2015**
(21) Application number: 12194621.4
(22) Date of filing: 02.10.2006
(51) Int. Cl.: B28D 1/04, E21B 10/30, E21B 10/36, F16L 35/00, B23K 11/00, B23K 35/02, C22C 29/08, C04B 35/56, B22F 1/00, E21B 10/50, B23K 35/22, B23K 35/32

(54) **Hardfacing composition having a specific particle size distribution**
Hartschweißzusammensetzung mit einer spezifischen Partikelgrößenverteilung
Composition de surfaçage avec une distribution spécifique des tailles de particules

(30) Priority: 03.10.2005 US 723122 P
(43) Date of publication of application: 20.03.2013
(62) Divisional of application: 06816157.9
(73) Proprietor: KENNAMETAL INC., Latrobe, PA 15650 (US)
(72) Inventor: Macleod, Moira E., Bella Vista, AR Arkansas 72714 (US)
(74) Representative: Prinz & Partner mbB

(56) References cited:
- WO-A1-96/23907
- GB-A- 2 395 202
- US-A- 4 944 774
- US-A- 5 733 649
- US-A- 5 944 127
- US-A1- 2004 140 133

## Description

### Background of the Invention

The present invention relates to a hardfacing composition, as well as an article having a hardfacing deposit. More particularly, the invention pertains to a hardfacing composition that is typically applied via a hardfacing rod, as well as an article having a hardfacing deposit, wherein the hardfacing deposit exhibits a microstructure that has improved consistency, as well as improved properties including wear properties such as, for example, abrasion resistance and erosion resistance.

Earth-engaging tools such as, for example, a rotary cone rock bit, typically operate in environments that subject the tools to wear such as erosive wear and abrasive wear. In order for such tools to function in a satisfactory manner, it is important for them to be able to resist wear including erosion and abrasion.

Heretofore, it has been known to deposit a hardfacing on the surface of an article (or substrate) whereby the hardfacing imparts improved properties, and especially wear properties including erosion resistance and abrasion resistance, to the article. Exemplary articles include an earth boring bit (e.g., a steel tooth rolling cutter drill bit) such as shown and described in European Patent No. 0 909 869 B1 to Camco International Inc. and in European Patent No. 0 53 375 B1 to Camco International Inc. U.S. Patent No. 5,944,127 to Liang et al. and U.S. Patent No. 6,659,206 to Liang et al. each disclose a rock bit that has a hardfacing deposit. Thus, it can be appreciated that hardfacing is used to extend the service life of drill bits (e.g., a rotary cone rock bit) and other downhole tools used in the oil and gas industry.

Hardfacing can be generally defined as applying a layer of hard, abrasion resistant material to the surface of a less abrasion resistant substrate such as, for example, steel, by plating, welding, spraying or other well-known deposition techniques. Tungsten carbide and its various alloys are sometimes used as hardfacing materials. Hardfacing is typically a mixture of a hard, wear-resistant material embedded in a matrix deposit which is preferably fused with the surface of a substrate by forming metallurgical-type bonds to ensure uniform adherence of the hardfacing to the substrate.

A wide variety of hardfacing materials have been satisfactorily used on drill bits and other downhole tools. Frequently used hardfacing material includes sintered tungsten carbide particles in an alloy steel matrix deposit. Other forms of tungsten carbide particles may include grains of monotungsten carbide (WC), ditungsten carbide (W₂C) and/or macrocrystalline tungsten carbide and/or crushed cast tungsten carbide. Further, other metal carbides and/or nitrides, in addition to tungsten carbide, can be used to form a hardfacing deposit. Satisfactory binder materials for the hardfacing may include materials such as cobalt, iron, nickel, alloys of iron, as well as other metallic alloys.

WO 96/23907 discloses a matrix powder for formation along with an infiltrant into a matrix for use as a wear element or for use in retaining at least one discrete hard element. The matrix powder includes crushed sintered cemented tungsten carbide particles. The composition of the crushed sintered cemented tungsten carbide comprises between about 6 weight percent and about 13 weight percent binder metal and between about 87 weight percent and about 94 weight percent tungsten carbide. US 2004/01400133 discloses fracture and wear resistant cutting elements. Examples include a cutting element formed of a wear resistant material having a binder composition and a coarse grain size such that the portion of the cutting element formed of the wear resistant material has a fracture toughness of at least about 18 ksi(in)<0.5 >and a wear number of at least about 1.8.

Macrocrystalline tungsten carbide is essentially stoichiometric WC, which is, for the most part, in the form of single crystals. Some large crystals of macrocrystalline tungsten carbide are bicrystals. U.S. Patent No. 3,3,379,503 to McKenna, assigned to the assignee of the present patent application, discloses a method of making macrocrystalline tungsten carbide. U.S. Patent No. 4,834,963 to Terry et al., assigned to the assignee of the present patent application, also discloses a method of making macrocrystalline tungsten carbide.

Crushed sintered cemented (cobalt) macrocrystalline tungsten carbide comprises small particles of tungsten carbide bonded together in a metal matrix. One makes crushed sintered cemented (cobalt) macrocrystalline tungsten carbide through the crushing of previously sintered carbide into blocky and non-blocky shapes wherein this crushed sintered macrocrystalline cemented (cobalt) tungsten carbide. One source of the crushed sintered cemented (cobalt) macrocrystalline tungsten carbide is Kennametal Inc. of Latrobe Pennsylvania 15650 wherein this material is sold under the designation Kenface.

To produce cemented carbide-cobalt pellets, tungsten carbide particles, cobalt powder and a lubricant are mixed together into a mixture. This mixture is pelletized and through a rolling process the mixture of tungsten carbide, cobalt and lubricant ball up into pellets.

Crushed cast tungsten carbide forms two carbides; namely, monotungsten carbide (WC) and ditungsten carbide (W₂C). There can be a continuous range of compositions between the monotungsten carbide and the ditungsten carbide. The eutectic mixture is about 4.5 weight percent carbon. Commercially available cast tungsten carbide typically used as a matrix powder generally has a hypoeutectic carbon content of about 4 weight percent. Cast tungsten carbide is typically frozen from the molten state and comminuted to the desired particle size to from the crushed cast tungsten carbide.

One way to apply the hardfacing deposit is to use a hardfacing rod. In this regard, U.S. Patent No. 5,250,355 to Newman et al. discloses the use of a hardfacing rod to apply the hardfacing deposit. While there may be some variations, generally speaking, a hardfacing rod comprises a hollow tube or rod that contains hard particles. The hard particles are applied to the surface of the article or substrate via welding techniques to form the hardfacing deposit. The hardfacing deposit includes a matrix (e.g., steel or the like) that comes from the substrate itself or from the welding rod or hollow rod. This technique of applying the hardfacing deposit is sometimes referred to as "tube rod welding."

While these earlier hardfacing compositions, including the hardfacing deposits formed from these compositions using hardfacing rods, have performed in a satisfactory fashion, there remains room for improvement. Thus, it would be desirable to provide an improved hardfacing deposit on an article that overcomes drawbacks associated with the current hardfacing compositions containing hard particles and current hardfacing deposits on an article.

For example, in the current hardfacing compositions containing hard particles, the nature of the particle size distribution of the hard particles results in some drawbacks. More specifically, the particle size distribution in the current hardfacing compositions leaves so-called gaps in the particle size distribution. What this means is that the hardfacing composition does not include hard particles having sizes within certain ranges of particle size distributions. The absence of these particles creates an interruption to the smooth distribution of hard particles across the spectrum of available particle size distributions. Because these gaps (or absences) can lead to certain problems for the hardfacing rod prior to use, as well as for the hardfacing deposit applied to an article, it would desirable to provide an improved hardfacing composition containing hard particles that reduces or eliminates the gaps in the particle size distribution.

One of the drawbacks extant with the presence of gaps in the particle size distribution of the hardfacing composition, and especially with respect to a hardfacing rod, is the possibility of the hard particles to shift their position within the hardfacing rod when jostled or struck or otherwise impacted during handling prior to baking, and such shift in position may occur even after baking as well. This shifting of the hard particles is due to an absence of mechanical support for all of the hard particles, and especially for those particles that are of a size somewhat smaller than the absent particle size distribution that creates the gap in the particle size distribution. Shifting of the hard particles in the hardfacing rod can result in a hardfacing deposit that has an inconsistent microstructure, which can result in less than optimum wear resistance properties. This inconsistency is also thought to create problems during the application of the rod hardfacing itself by having pockets of material deposited instead of the deposition of a homogeneous mixture. Thus, it would be desirable to provide an improved hardfacing composition (including an improved hardfacing rod) containing hard particles that does not present gaps in the particle size distribution so as to reduce or eliminate the shifting of particles due to the jostling of the hardfacing rod as well as to maximize the distribution to increase wear properties.

Another drawback extant with the presence in gaps in the particle size distribution of the hardfacing composition, and especially with a hardfacing rod, is the tendency of the hard particles to migrate to the bottom of the liquid weld pool during the weld pool solidification. As mentioned above, gaps in the particle size distribution of the hard particles leads to a lack of mechanical support for the hard particles. When the weld pool is liquid, this lack of mechanical support allows the hard particles to migrate to the bottom of the weld pool.

The migration of the hard particles results in a non-uniform hardfacing deposit upon the solidification of the weld pool in which the hard particles are generally uniformly distributed throughout the microstructure of the hardfacing deposit. A non-uniform hardfacing deposit leads to uneven wear of the hardfacing deposit during use. Thus, it would be desirable to provide an improved hardfacing composition (including an improved hardfacing rod) containing hard particles that does not present gaps in the particle size distribution, and as a result, there is a reduction or elimination of the migration of the hard particles in the liquid weld pool during the welding operation.

Still another one of the drawbacks extant with the presence in gaps in the particle size distribution of the hardfacing composition, and especially with a hardfacing rod, is the tendency of the deoxidizer (which is a typical component of the hardfacing composition) to segregate in the hardfacing rod. Such segregation could potentially occur when the hardfacing rod is being produced or prior to baking of the hardfacing rod. When the deoxidizer is segregated in the hardfacing composition, there is the tendency to impede the effective release of gases during the welding operation when the weld pool is liquid. By impeding the effective release of the gases, trapped gas pockets form in the weld pool. The presence of these gas pockets could potentially cause the hardfacing deposit to exhibit porosity. Thus, it would be desirable to provide an improved hardfacing composition (including an improved hardfacing rod) that does not present gaps in the particle size distribution, and thereby reduces or eliminates the segregation of deoxidizer so as to reduce or eliminate presence of trapped gas pockets in the hardfacing deposit.

### Summary of the Invention

The invention is a hardfacing composition as defined in claim 1 that comprises a plurality of hard particles wherein the hard particles comprise a mode particle size distribution, one particle size distribution smaller than the mode particle size distribution and an other particle size distribution larger than the mode particle size distribution. There is a smooth transition between the mode particle size distribution and the one particle size distribution. There is a smooth transition between the mode particle size distribution and the other particle size distribution.

Also disclosed herein is a hardfacing composition that comprises a plurality of hard particles wherein the hard particles comprise a mode particle size distribution, one particle size distribution smaller than the mode particle size distribution and an other particle size distribution larger than the mode particle distribution. There is an absence of any substantial fluctuations in the particle size distribution between the mode particle size distribution and the one particle size distribution. There is an absence of any substantial fluctuations in the particle size distribution between the mode particle size distribution and the other particle size distribution.

### Brief Description of the Drawings

The following is a brief description of the drawings which form a part of this patent application:
FIG. 1 is an isometric view of a milled tooth rotary cone rock bit with hardfacing material on each tooth;
FIG. 2 is a cross-sectional view of a milled tooth from FIG. 1 showing the hardfacing on the surface of the tooth;
FIG. 3 is an isometric view of a hardfacing rod;
FIG. 4 is a histogram that shows a theoretical particle size distribution for one exemplary hardfacing composition; and
FIG. 5 is a histogram that shows a theoretical particle size distribution for another exemplary hardfacing composition.

### Detailed Description of Specific Embodiments

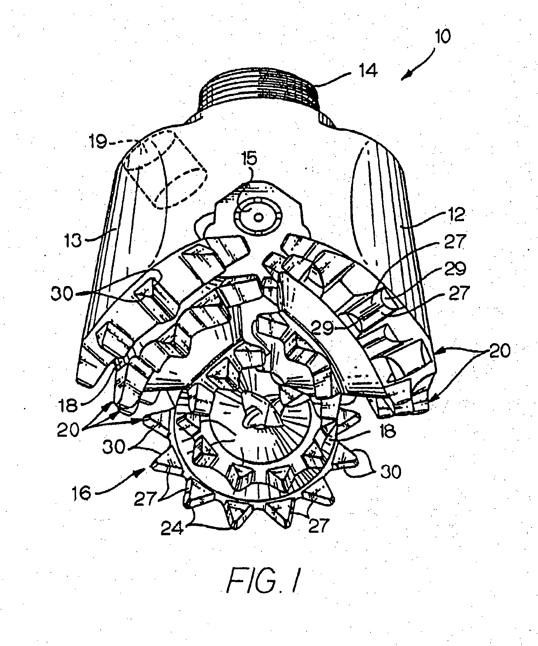

Referring to the drawings, FIG. 1 illustrates a mill tooth rotary cone rock bit generally designated as 10. This rotary cone rock bit is shown and described in U.S. Patent No. 5,152,194 to Keshavan et al. wherein this patent is hereby incorporated by reference herein. The following is a brief description of the rotary cone rock bit.

The rock bit 10 includes a bit body 12 that is threaded at pin end 14 and cutting end generally designated as 16. Each leg 13 supports a rotary cone 18 rotatively retained on a journal cantilevered from each of the legs (not shown). The mill teeth generally designated as 20 extending from each of the cones 18 is typically milled from steel.

Each of the chisel crested teeth 20 forms a crest 24, a base 22, two flanks 27, and tooth ends 29.

As indicated before hardfacing material is generally applied on each of the teeth 20. In some cases the application of hardfacing is applied only to the cutting side of the tooth as opposed to the other flanks and ends of the teeth.

The rock bit 10 further includes a fluid passage through pin 14 that communicates with a plenum chamber 17 (not shown). Typically one or more nozzles 15 are secured within body 12. The nozzles direct from plenum chamber 17 towards a borehole bottom. The upper portion of each of the legs may have a lubricant reservoir 19 to supply a lubricant to each of the rotary cones 18.

The chisel tooth generally designated as 20 consists of, for example, steel foundation 21, forming flanks 27, ends 29 and a crest 24. Between the rounded corners 26 is a concave portion 25 formed by the crest 24 of the tooth. The concave portion 25 enables the hardfacing material to form a thicker portion at the middle of the crest 24 therefore providing a more robust cutting crest 24. Each of the corners 26 have a sufficient radius so that the thickness of the hardfacing material is assured as it transitions from the crest 24 towards the ends 29 and the flanks 27 of the tooth 20. The hardfacing material terminates in a groove or shoulder 23 formed at the base 22 at each of the teeth 20. The shoulder or groove 23 provides a termination point for the hardfacing material 32 as it is applied over the crest ends and flanks of each of the teeth 20.

By providing a concave portion or depression 25 and rounded corners 26 at the end of the crested tooth, the hardfacing material may be applied more generously in the center of the crest and at a sufficient thickness around the rounded corners 26. The large radius at the corners assure a thick hardfacing material at a vulnerable area of the tooth.

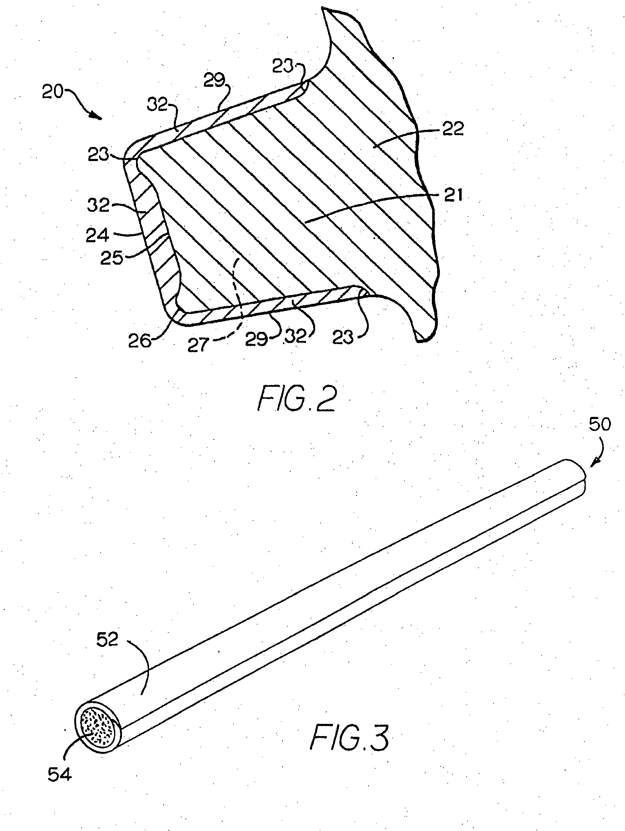

FIG. 3 shows a hardfacing rod 50 that comprises a tube 52 which contains hard particles 54.

A comparative hardfacing composition, which is designated as Comparative Example A, is set forth in Table 1 below.

**Table 1 Hardfacing Composition of Comparative Example A (Original Formulation)**

| Description | Wt. % |
|---|---|
| 16/20 pellets | 70 |
| 40/80 cast | 14 |
| 40/80 Kenface | 12 |
| 60/170 Si-Mn | 4 |

In Table 1, the left column presents the type of hard material and the particle size range in Mesh wherein, for example, 16/20 means -16+20 Mesh. In regard to the type of hard material, the term "pellets" refers to cemented tungsten carbride-cobalt ait pellets. The term "cast" refers to cast tungsten carbide particles and the term "Kenface" refers to the Kenface crushed sintered cemented (cobalt) macrocrystalline tungsten carbide particles available from Kennametal Inc. The term Si-Mn refers to a silicon-manganese deoxidizer. The above description of the materials listed in Table 1 is applicable to the other tables in the application where appropriate. The right column of Table 1 presents the content of the hard material in weight percent.

Set forth below in Table 2 is Reference Example No. 1, which is one composition of the hardfacing. A comparison of the composition, of Comparative Example A and Reference Example No. 1 shows that the particle size distribution has expanded toward the smaller particle sizes in that there is a component of -325 Mesh tungsten carbide particles (WC), and the cast tungsten carbide particles now have a -100 +200 Mesh size range in addition to the -40+80 Mesh particle size range.

There has also been a reduction in the gap with respect to the coarser (-16+20 Mesh) cemented tungsten carbide-cobalt pellets. In this regard, the amount of -16+20 Mesh pellets was reduced from 70 weight percent to 15 weight percent and 55 weight percent of smaller (-20+30 Mesh) cemented tungsten carbide-cobalt pellets was added as a component. The size of the Kenface component was increased from -40/+80 Mesh to -20/+30 Mesh.

Overall, it can be seen that these changes in composition between the Comparative Example A and Reference Example No. 1 result in a particle size distribution in which there is a substantially smooth transition between the mode particle size distribution and the smaller particle size distribution (i.e., one particle size distribution smaller than the mode particle size distribution), as well as a substantially smooth transition between the mode particle size distribution and the larger particle size distribution (i.e., an other particle size distribution larger than the mode particle size distribution). Further, it should be appreciated that there is an absence of any substantial fluctuations in the particle size distribution between the mode particle size distribution and the smaller particle size distribution (i.e., one particle size distribution smaller than the mode particle size distribution), as well as there is an absence of any substantial fluctuations in the particle size distribution between the mode particle size distribution and the larger particle size distribution(i.e., an other particle size distribution larger than the mode particle size distribution).

**Table 2**

| Hardfacing Composition (Weight Percent) of Reference Example No. 1 | |
|---|---|
| Description | Wt.% |
| 16/20 pellets | 15 |
| 20/30 pellets | 55 |
| 20/30 Kenface | 8 |
| 40/80 cast | 8 |
| 100/200 cast | 5 |
| 60/170 Si-Mn | 4 |
| -325 mesh WC | 5 |

In Table 2, the left column presents the particle size range and the hard material and the right column presents the composition in weight percent. In Table 2 as well as in the other tables, where applicable, the term "WC" refers to tungsten carbide particles.

Table 3 below presents the hardfacing composition for Inventive Example No. 2. In Inventive Example No. 2, a comparison of Comparative Example A and Inventive Example No. 2 shows that the content of the -16+20 Mesh cemented tungsten carbide-cobalt pellets was reduced from 70 weight percent to 15 weight percent and that the particle size distribution of the cemented tungsten carbide-cobalt pellets included 23 weight percent - 20+30 Mesh pellets and 32 weight percent -30+40 Mesh pellets. This change provided a more substantially smooth transition from the mode particle size to the larger particle sizes. By this it can be appreciated that there is an absence of any substantial fluctuations in the particle size distribution between the mode particle size distribution and the larger particle size distribution. This in combination with the various shapes of the particles that are chosen as set forth above will positively affect how the structure will pack during the weld pool solidification process.

The balance of the components in Inventive Example No. 2 are along the lines of Reference Example No. 1 so that there is a substantially smooth transition between the mode particle size distribution and the smaller particle size distribution. In the overall composition, it can be appreciated that there is an absence of any substantial fluctuations in the particle size distribution between the mode particle size distribution and the smaller particle size distribution, as well as there is an absence of any substantial fluctuations in the particle size distribution between the mode particle size distribution and the larger particle size distribution.

**Table 3**

| Hardfacing Composition (Weight Percent) of Inventive Example No. 2 | |
|---|---|
| Description | Wt.% |
| 16/20 pellets | 15 |
| 20/30 pellets | 23 |
| 30/40 pellets | 32 |
| 40/80 Kenface | 6 |
| 40/80 cast | 10 |
| 100/200 cast | 5 |
| 60/170 Si-Mn | 4 |
| -325 mesh WC | 5 |

Reference Example No. 3 below (Table 4) presents a hardfacing composition in which the cemented tungsten carbide-cobalt pellet component was spread out from 70 weight percent -16+20 Mesh to 20 weight percent -20+30 Mesh pellets and 50 weight percent -30+40 Mesh pellets. This change provided a more substantially smooth transition from the mode particle size to the larger particle sizes. By this it can be appreciated that there is an absence of any substantial fluctuations in the particle size distribution between the mode particle size distribution and the larger particle size distribution.

The balance of the components are along the lines of Reference Example No. 1 so that there is a substantially smooth transition between the mode particle size distribution and the smaller particle size distribution. In the overall composition, it can be appreciated that there is an absence of any substantial fluctuations in the particle size distribution between the mode particle size distribution and the smaller particle size distribution, as well as there is an absence of any substantial fluctuations in the particle size distribution between the mode particle size distribution and the larger particle size distribution.

**Table 4**

| Hardfacing Composition (Weight Percent) of Reference Example No. 3 | |
|---|---|
| Description | Wt.% |
| 20/30 pellets | 20 |
| 30/40 pellets | 50 |
| 40/80 Kenface | 6 |
| 40/80 cast | 10 |
| 100/200 cast | 5 |
| 60/170 Si-Mn | 4 |
| -325 mesh | 5 |

Table 5 below sets forth the composition of Comparative Example B.

**Table 5**

| Hardfacing Composition (Weight Percent) of Comparative Example No. B (Original Formulation) | |
|---|---|
| Description | Wt.% |
| 30/40 pellets | 71.5 |
| 40/80 cast | 15.5 |
| 40/80 Kenface | 13.5 |
| 60/170 Si-Mn | 4 |

In Reference Example No. 4 (Table 6 below), the original hardfacing of Comparative Example B has been spread out to include more materials. Table 6 sets forth the composition of Reference Example No. 4.

More specifically, the particle size distribution of the cemented tungsten carbide-cobalt pellets was changed from 71.5 weight percent -30+40 Mesh pellets to a wider distribution toward the larger particles. In this regard, the pellets comprise 4 weight percent - 10+24 Mesh pellets, 8 weight percent -18+35 Mesh pellets, 18 weight percent -20+30 Mesh pellets and 30 weight percent -30+40 Mesh pellets. There is also a -100+325 Mesh pellet component.

The particle size distribution of the cast tungsten carbide component was spread out moving from 15.5 weight percent -40+80 Mesh to -40+80 Mesh (5 weight percent) and -100+200 Mesh (5 weight percent). The 13.5 weight percent -40+80 Mesh Kenface component was also spread out to -20+40 Mesh (10 weight percent) and -40+80 Mesh (7 weight percent). There was also an addition of -325 Mesh tungsten carbide particles.

Overall, it can be seen that these changes in composition between the Comparative Example B and Inventive Example No. 4 result in a particle size distribution in which there is a substantially smooth transition between the mode particle size distribution and the smaller particle size distribution, as well as a substantially smooth transition between the mode particle size distribution and the larger particle size distribution. Further, there is an absence of any substantial fluctuations in the particle size distribution between the mode particle size distribution and the smaller particle size distribution, as well as there is an absence of any substantial fluctuations in the particle size distribution between the mode particle size distribution and the larger particle size distribution.

**Table 6**

| Hardfacing Composition (Weight Percent) of Reference Example No. 4 | |
|---|---|
| Description | Wt. % |
| 10/24 pellets | 4 |
| 18/35 pellets | 8 |
| 20/30 pellets | 18 |
| 30/40 pellets | 30 |
| 100/325 pellets | 5 |
| 20/40 Kenface | 10 |
| 40/80 Kenface | 7 |
| 40/80 cast | 5 |
| 100/200 cast | 5 |
| 60/170 Si-Mn | 4 |
| -325 mesh WC | 4 |

Applicant presents in Table 7 below wear data performed according to a B611 test.

**Table 7**

| Hardfacing coupons-new raw materials (B611) | | | | | | |
|---|---|---|---|---|---|---|
| Modified rod for improved weldability | | | | | | |
| High stress (B611) | | | | | | |
| Designation | Mass₁ | Mass₂ | Wt. loss | P(g/cc) | B611 | Normalized#* |
| Comp. Ex. A | 67.9047 | 65.7206 | 2.1841 | 10.77 | 4.93 | 2.40 |
| Comp. Ex. A | 66.1836 | 64.0425 | 2.1411 | 10.77 | 5.03 | 2.45 |
| Example 1 | 68.2208 | 65.9646 | 2.2562 | 10.04 | 4.45 | 2.23 |
| Example 1 | 75.0237 | 72.7629 | 2.2608 | 10.04 | 4.40 | 2.20 |
| Example 2 | 71.7112 | 69.4847 | 2.2265 | 10.34 | 4.64 | 2.32 |
| Example 2 | 64.9833 | 62.8694 | 2.1139 | 10.34 | 4.89 | 2.45 |
| Example 3 | 65.4763 | 63.1830 | 2.2933 | 11.07 | 4.82 | 2.41 |
| Example 3 | 69.9478 | 67.6469 | 2.3009 | 11.07 | 4.81 | 2.41 |
| Comp. Ex B | 63.5756 | 61.2661 | 2.3095 | 10.96 | 4.75 | 2.31 |
| Comp. Ex. B | 69.9833 | 67.1394 | 2.8439 | 10.96 | 3.85 | 1.88 |

| | | | | | | |
|---|---|---|---|---|---|---|
| *Higher number is more wear resistance. | | | | | | |

It is apparent that by smoothing out the particle size distribution one can affect the wear properties, as well as the welding characteristics, of the hardfacing without making major changes to the base formulation of the composition. One can balance the application process including the ease of applying the hardfacing, against the metallurgical benefits (e.g., wear properties) of the hardfacing. For example, a smaller hard particle distribution may allow for flow so that one can apply the hardfacing with greater ease during an oxyacetylene process, but such a hardfacing will not have as good as wear properties as a rod with coarser hard particles.

Applicant also expects to utilize the inventive particle size distributions along with various alloys. These hardfacing compositions can use alloys such as Invar® Alloy or Inconel® Alloy or Monel® Alloy. Invar® is a registered trademark of Imphy S.A. Corporation of Paris, France. The composition (in weight percent) of the commercially available Invar® alloy is 31 % nickel - 5% cobalt - 64% iron. Inconel® is a registered trademark of Huntington Alloy Corporation. The composition of the commercially available Inconel® alloy is 76% nickel - 17% chromium - 7% iron. Monel® is a registered trademark of Huntington Alloy Corporation. The composition of the commercially available Monel® alloy is 28% copper - 67% nickel - 3% iron - 2% manganese. These hardfacing compositions are expected to provide the hardfacing compositions with properties connected with the addition of these corrosion-resistant high temperature alloys such as, for example, the ability of the weld pool to maintain the cemented (cobalt) tungsten carbide intact (or at least prevent their compete dissolution) in those instances when the welders overheated the weld pool during the formation of the hardfacing deposit.

Table 8 below presents the basic composition of Reference Example No. 5, except that each one of these components will be reduced by 3 percent so as to accommodate an overall addition of 3 percent of the alloy. These alloys could be one or more of the above listed alloys or include one or more of any of nickel, Invar®, Inconel®, and Monel®. The alloys Invar®, Inconel®, Monel® have already been described above. In regard to the nickel, it is NI-124 with the following properties: 100/325 mesh spherical high density, 99.9% purity, density is 8.903 grams/cm³, Brinnell hardness annealed is equal to 75, and the coefficient of expansion @20 degrees Centigrade is equal to 13.3 X 10⁻⁶, electrical resistivity is equal to 6.844 microhm-cm and the crystal structure is face centered cubic.

**Table 8**

| Hardfacing Composition (Weight Percent) of Reference Example No. 5 | |
|---|---|
| Description | Wt.% |
| 10 / 24 pellets | 4 |
| 18 / 35 pellets | 8 |
| 20/30 pellets | 18 |
| 30/40 pellets | 30 |
| 100 / 325 pellets | 5 |
| 20/40 Kenface | 10 |
| 40/80 Kenface | 7 |
| 40/80 cast | 5 |
| 100/200 cast | 5 |
| 60/170 Si-Mn | 4 |
| -325 mesh WC | 4 |

As can be appreciated from the above-disclosed inventive hardfacing compositions, there are essentially no gaps in the particle size distribution of the hard particles in inventive examples. What this means is that particle size distribution fluctuations from the most populous size range to the smallest particle size range has been minimized and reduced from what has heretofore been available.

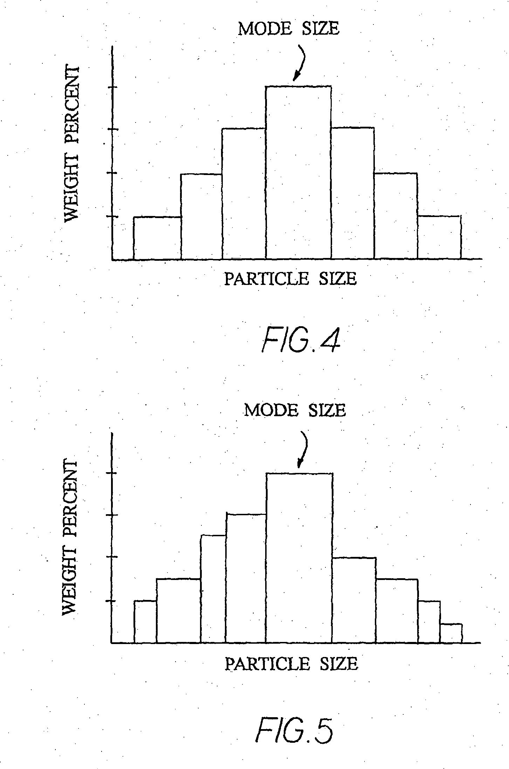

In this regard, FIG. 4 is a histogram that shows a theoretical particle size distribution for one exemplary hardfacing composition. The vertical axis presents the weight percent and the horizontal axis presents the particle size distribution in particle size ranges. Because this particle size distribution is theoretical, there are no specific weight percentages or particle sizes listed on the histogram. However, it should be appreciated that the total weight percent equals one hundred weight percent and the particle size ranges are those that would be suitable for use as a hardfacing.

In this histogram of FIG. 4, the most populous particle size distribution is the mode size. See Randall M. German, Powder Metallurgy Science, Metal Powder Industries Federation, Princeton, New Jersey (1984) including the text at page 28. As can be seen, while the configuration of the particle size distribution is not a perfect bell curve, there are essentially no substantial fluctuations in the particle size distribution from the mode size to the smallest particle size distribution or from the mode size to the largest particle size distribution. In other words, one could say that there is a substantially smooth transition from the mode size (i.e., most populous particle size distribution) to the smallest particle size distribution and a substantially smooth transition from the mode size to the largest particle size distribution

As another example, FIG. 5 is a histogram that shows a theoretical particle size distribution for another exemplary hardfacing composition. The vertical axis presents the weight percent and the horizontal axis presents the particle size distribution in particle size ranges. Because this particle size distribution is theoretical, there are no specific weight percentages or particle sizes listed on the histogram. However, it should be appreciated that the total weight percent equals one hundred weight percent and the particle size ranges are those that would be suitable for use as a hardfacing.

In this histogram, like for FIG. 4, the most populous particle size distribution is the mode size. As can be seen, while the configuration of the particle size distribution is different from that of FIG. 4, there still are essentially no substantial fluctuations in the particle size distribution from the mode size to the smallest particle size distribution or from the mode size to the largest particle size distribution. In other words, one could say that there is a substantially smooth transition from the mode size (i.e., most populous particle size distribution) to the smallest particle size distribution and a substantially smooth transition from the mode size to the largest particle size distribution.

As set forth hereinabove, one of the advantages to a hardfacing composition containing hard particles wherein there are no gaps (i.e., no significant fluctuations) in the particle size distribution is the reduction or elimination of migration of the hard particles to the bottom of the liquid weld pool during application. Applicant expects that the hardfacing deposit from any of the inventive examples would provide a hardfacing deposit that exhibits a consistency wherein the hard particles would not have migrated to the bottom of the liquid weld pool. In this regard, the applicant expects that the hard particles (e.g., cast tungsten carbide particles and cemented (cobalt) tungsten carbide pellets) are more uniformly distributed throughout the microstructure of the hardfacing deposit. Applicant would also expect that smaller-sized cemented (cobalt) tungsten carbide pellets would remain intact in the hardfacing deposit.

In the examples set forth above, tungsten carbide or a tungsten carbide-based material has been the focus of the composition. It should be appreciated that other kinds of hard materials can be suitable for use in these hardfacing compositions. Exemplary of the material can be diamonds, cermets and possibly even ceramics.

It can be appreciated that the inventive hardfacing compositions contain hard particles that exhibit particle size distributions wherein there are no (or at least there are minimal) gaps or no significant fluctuations in the particle size distribution. By providing a hardfacing composition that contains hard particles with no or minimal gaps or no significant fluctuations in the particle size distribution, (i.e., the hard particles have sizes that are within certain ranges of particle size distributions so as to not interrupt the smooth distribution of hard particles across the spectrum of available particle size distributions) applicant has provided a solution to current drawbacks.

It can be appreciated that through the inventive hardfacing composition containing hard particles, applicant has provided an improved hardfacing composition (including an improved hardfacing rod) that does not present gaps in the particle size distribution so as to reduce or eliminate the shifting of particles due to the jostling of the hardfacing rod. Further, it can also be appreciated that through the inventive hardfacing composition containing hard particles, applicant has provided an improved hardfacing composition (including an improved hardfacing rod) containing hard particles that does not present gaps in the particle size distribution, and as a result, reduces or eliminates the migration of the hard particles in the liquid weld pool during the welding operation. In addition, it becomes apparent that through the inventive hardfacing composition containing hard particles, applicant has provided an improved hardfacing composition (including an improved hardfacing rod) that does not present gaps in the particle size distribution, and thereby reduces or eliminates the segregation of deoxidizer so as to reduce or eliminate the presence of trapped gas pockets in the hardfacing deposit.

The patents, patent applications, and other documents identified herein are hereby incorporated by reference herein.

Other embodiments of the invention will be apparent to those skilled in the art from a consideration of the specification of the practice of the invention disclosed herein. It is intended that the specification and examples be considered as illustrative only, and that the true spirit and scope of the invention being indicated by the following claims.

## Claims

1. A hardfacing composition consisting of a plurality of hard particles selected from one or more of crushed sintered cemented (cobalt) macrocrystalline tungsten carbide particles, cemented tungsten carbide-cobalt pellets, and cast tungsten carbide particlesdiamonds, cermets and ceramics, and optionally a deoxidizer, wherein the hard particles comprise a mode particle size distribution having a size range greater than 420 micrometers and less than 595 micrometers (-30+40 Mesh), one particle size distribution smaller than the mode particle size distribution having a size range greater than 177 micrometers and less than 420 micrometers (-40+80 Mesh), and another particle size distribution larger than the mode particle size distribution having a size range greater than 595 micrometers and less than 841 micrometers (-20+30 Mesh); and there being a smooth transition between the mode particle size distribution and the one particle size distribution and there being a smooth transition between the mode particle size distribution and the other particle size distribution; and wherein the hard particles in the size range greater than 420 micrometers and less than 595 micrometers (-30+40 Mesh) comprise between 30 weight percent and 35 weight percent of the hard particles, the hard particles in the size range greater than 177 micrometers and less than 420 micrometers (-40+80 Mesh) comprising between 10 weight percent and 20 weight percent of the hard particles, and the other hard particles in the size range greater than 595 micrometers and less than 841 micrometers (-20+30 Mesh) comprising between 20 weight percent and 26 weight percent of the hard particles of the hardfacing composition; and wherein the hardfacing composition further comprises hard particles having a particle size distribution with a size range of between greater than 841 µm and less than 1.19 mm (-16+20 Mesh) and comprising between 10 and 20 weight percent, of the hard particles of the hardfacing composition, hard particles having a particle size distribution with a size range of between greater than 74 µm and less than 149 µm (-100+200 Mesh) and comprising between 3 weight percent and 7 weight percent of the hard particles of the hardfacing composition, and hard particles having a particle size distribution with a size range of less than or equal to 44 µm (-325 Mesh) and comprising between 3 weight percent and 7 weight percent of the hard particles of the hardfacing composition.

2. The hardfacing composition of claim 1 wherein the hardfacing composition further includes a deoxidizer.

3. The hardfacing composition of claim 2 wherein the deoxidizer is a silicon-manganese deoxidizer.

## Patentansprüche

1. Hartauftragsschweißzusammensetzung, die aus einer Vielzahl von harten Partikeln besteht, die aus einem oder mehreren von zerkleinerten gesinterten, zementierten (Kobalt) makrokristallinen Wolframkarbidpartikeln, zementierten Wolframkarbid-Kobalt-Pellets und gegossenen Wolframkarbidpartikeln, Diamanten, Keramik-Metall-Verbundwerkstoffen und Keramiken, und optional einem Desoxidationsmittel ausgewählt sind, wobei die harten Partikel einen Modalwert der Partikelgrößenverteilung aufweisen, der einen Größenbereich von mehr als 420 Mikrometern und weniger als 595 Mikrometern (-30+40 Mesh) aufweist, wobei eine Partikelgrößenverteilung, die kleiner als der Modalwert der Partikelgrößenverteilung ist, einen Größenbereich von mehr als 177 Mikrometern und weniger als 420 Mikrometern (-40+80 Mesh) aufweist, und eine andere Partikelgrößenverteilung, die größer als der Modalwert der Partikelgrößenverteilung ist, einen Größenbereich von mehr als 595 Mikrometern und weniger als 841 Mikrometern (-20+30 Mesh) aufweist; und wobei es einen glatten Übergang zwischen dem Modalwert der Partikelgrößenverteilung und der einen Partikelgrößenverteilung gibt und es einen glatten Übergang zwischen dem Modalwert der Partikelgrößenverteilung und der anderen Partikelgrößenverteilung gibt; und wobei die harten Partikel im Größenbereich von mehr als 420 Mikrometern und weniger als 595 Mikrometern (-30+40 Mesh) zwischen 30 Gewichtsprozent und 35 Gewichtsprozent der harten Partikel ausmachen, wobei die harten Partikel im Größenbereich von mehr als 177 Mikrometern und weniger als 420 Mikrometern (-40+80 Mesh) zwischen 10 Gewichtsprozent und 20 Gewichtsprozent der harten Partikel ausmachen, und wobei die anderen harten Partikel im Größenbereich von mehr als 595 Mikrometern und weniger als 841 Mikrometern (-20+30 Mesh) zwischen 20 Gewichtsprozent und 26 Gewichtsprozent der harten Partikel der Hartauftragsschweißzusammensetzung ausmachen; und wobei die Hartauftragsschweißzusammensetzung ferner harte Partikel, die eine Partikelgrößenverteilung mit einem Größenbereich zwischen mehr als 841 µm und weniger als 1,19 mm (-16+20 Mesh) aufweisen und zwischen 10 und 20 Gewichtsprozent der harten Partikel der Hartauftragsschweißzusammensetzung ausmachen, harte Partikel, die eine Partikelgrößenverteilung mit einem Größenbereich zwischen mehr als 74 um und weniger als 149 µm (-100+200 Mesh) aufweisen und zwischen 3 Gewichtsprozent und 7 Gewichtsprozent der harten Partikel der Hartauftragsschweißzusammensetzung ausmachen, und harte Partikel aufweist, die eine Partikelgrößenverteilung mit einem Größenbereich von weniger als oder gleich 44 µm (-325 Mesh) aufweisen und zwischen 3 Gewichtsprozent und 7 Gewichtsprozent der harten Partikel der Hartauftragsschweißzusammensetzung ausmachen.

2. Hartauftragsschweißzusammensetzung nach Anspruch 1, wobei die Hartauftragsschweißzusammensetzung ferner ein Desoxidationsmittel aufweist.

3. Hartauftragsschweißzusammensetzung nach Anspruch 2, wobei das Desoxidationsmittel ein Silizium-Mangang-Desoxidationsmittel ist.

## Revendications

1. Composition de revêtement dur constituée d'une pluralité de particules dures choisies à partir d'une ou plusieurs des particules de carbure de tungstène macrocristallin cémenté (cobalt), fritté, broyé, des pastilles de carbure de tungstène cémenté-cobalt, et des particules de carbure de tungstène coulé, les diamants, les cermets et les céramiques, et éventuellement un désoxydant, les particules dures comprenant une distribution de taille de particules modale ayant une gamme de taille supérieure à 420 micromètres et inférieure à 595 micromètres (-30+40 mesh), une distribution de taille de particules inférieure à la distribution de taille de particules modale ayant une gamme de taille supérieure à 177 micromètres et inférieure à 420 micromètres (-40+80 mesh), et une autre distribution de taille de particules supérieure à la distribution de taille de particules modale ayant une gamme de taille supérieure à 595 micromètres et inférieure à 841 micromètres (-20+30 mesh) ; et une transmission douce existant entre la distribution de taille de particules modale et la première distribution de taille de particules et une transition douce existant entre la distribution de taille de particules modale et l'autre distribution de taille de particules ; et les particules dures dans la gamme de taille supérieure à 420 micromètres et inférieure à 595 micromètres (-30+40 mesh) constituant entre 30 pour cent en poids et 35 pour cent en poids des particules dures, les particules dures dans la gamme de taille supérieure à 177 micromètres et inférieure à 420 micromètres (-40+80 mesh) constituant entre 10 pour cent en poids et 20 pour cent en poids des particules dures, et les autres particules dures dans la gamme de taille supérieure à 595 micromètres et inférieure à 841 micromètres (-20+30 mesh) constituant entre 20 pour cent en poids et 26 pour cent en poids des particules dures de la composition de revêtement dur ; et la composition de revêtement dur comprenant en outre des particules dures ayant une distribution de taille de particules avec une gamme de taille entre plus de 841 µm et moins de 1,19 mm (-16+20 mesh) et constituant entre 10 et 20 pour cent en poids des particules dures de la composition de revêtement dur, des particules dures ayant une distribution de taille de particules avec une gamme de taille entre plus de 74 µm et moins de 149 µm (-100+200 mesh) et constituant entre 3 pour cent en poids et 7 pour cent en poids des particules dures de la composition de revêtement dur, et des particules dures ayant une distribution de taille de particules avec une gamme de taille inférieure ou égale à 44 µm (-325 mesh) et constituant entre 3 pour cent en poids et 7 pour cent en poids des particules dures de la composition de revêtement dur.

2. Composition de revêtement dur selon la revendication 1, la composition de revêtement dur comportant en outre un désoxydant.

3. Composition de revêtement dur selon la revendication 2 dans laquelle le désoxydant est un désoxydant au silicium-manganèse.
